(19) Europäisches Patentamt
European Patent Office
Office européen des brevets

(11) EP 3 127 776 B1

(12) **EUROPEAN PATENT SPECIFICATION**

(45) Date of publication and mention
of the grant of the patent:
**05.12.2018 Bulletin 2018/49**

(21) Application number: **14886699.9**

(22) Date of filing: **27.03.2014**

(51) Int Cl.:
*B60W 50/14* (2012.01)   *B62D 5/00* (2006.01)
*B60W 40/09* (2012.01)   *G05D 1/00* (2006.01)
*B62D 1/28* (2006.01)   *B62D 15/02* (2006.01)
*B62D 1/04* (2006.01)   *B62D 1/06* (2006.01)
*B60Q 9/00* (2006.01)   *B60Q 3/283* (2017.01)

(86) International application number:
**PCT/JP2014/058912**

(87) International publication number:
**WO 2015/145674 (01.10.2015 Gazette 2015/39)**

(54) **VEHICLE BEHAVIOR TRANSMISSION DEVICE**

FAHRZEUGVERHALTENSÜBERTRAGUNGSVORRICHTUNG

DISPOSITIF DE TRANSMISSION DE COMPORTEMENT DE VÉHICULE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**08.02.2017 Bulletin 2017/06**

(73) Proprietor: **NISSAN MOTOR CO., LTD.
Yokohama-shi, Kanagawa 221-0023 (JP)**

(72) Inventor: **SAKUMA, Tsuyoshi
Atsugi-shi
Kanagawa 243-0123 (JP)**

(74) Representative: **Grünecker Patent- und
Rechtsanwälte
PartG mbB
Leopoldstraße 4
80802 München (DE)**

(56) References cited:
| | |
|---|---|
| WO-A1-98/03365 | WO-A1-2004/106145 |
| JP-A- H04 129 872 | JP-A- 2000 031 825 |
| JP-A- 2004 148 911 | JP-A- 2006 318 024 |
| JP-A- 2009 096 450 | JP-A- 2009 208 551 |
| JP-A- 2011 240 868 | JP-A- 2012 040 977 |
| JP-A- 2012 076 639 | JP-A- 2012 076 639 |
| JP-A- 2012 256 273 | JP-U- S60 120 365 |
| US-A1- 2011 187 518 | US-B1- 8 260 482 |

**Description**

The present invention relates to a vehicle behavior transmission device.

Conventionally known is a technique in which a light-emitting unit is disposed on a steering wheel and is caused to emit light to present information when the surrounding conditions are determined to be dangerous (see, for example, Patent Literature 1).

Patent Literature 1: Japanese Patent Application Publication No. 2009-18722

In recent years, automated driving vehicles which are capable of automatically controlling vehicle behavior have been under development. Particularly, it is desirable that an automated driving vehicle presents in advance vehicle behavior which occurs during automated driving control in such a way as to allow an occupant to easily and intuitively understand the vehicle behavior. The method described in Patent Literature 1, however, is incapable of presenting in advance the vehicle behavior which occurs during the automated driving control to the occupant. Moreover, information presented by emission of the light-emitting unit and a position of emission on the steering wheel are irrelevant. Hence, there has been a problem that it is difficult for the driver to understand intuitively the presented information.

WO 2004/106145 A1 discloses the preamble of claim 1 and relates to a display unit for representing a target steering angle of a steering wheel of a vehicle for communicating a steering direction to the driver. US 2011/187518 A1 relates to a display unit inside a vehicle for communicating a desired control action to the driver of a vehicle.

JP 2012/076639 A relates to a display for communicating a target angle of a steering wheel angle to a driver of a vehicle in order to follow a preceding vehicle.

In view of the above-described problem, an object of the present invention is to provide a vehicle behavior transmission device which is capable of presenting in advance vehicle behavior in such a way as to allow an occupant to easily and intuitively understand the vehicle behavior which occurs during automated driving control.
This is achieved by the features of the independent claim.

According to an aspect of the present invention, a vehicle behavior transmission device in an automated driving vehicle capable of automatically controlling the vehicle behavior indicates a direction in which the vehicle behavior occurs by calculating the vehicle behavior during automated driving control, determining a pattern of emission according to the calculated vehicle behavior, and causing light sources disposed on a steering wheel to emit light according to the pattern of emission.

According to another aspect of the present invention, a vehicle behavior transmission device in the automated driving vehicle capable of automatically controlling the vehicle behavior is capable of freely controlling a relationship between a turning angle of a turning wheel and a steering angle of the steering wheel, and indicates the direction in which the vehicle behavior occurs by calculating the vehicle behavior during the automated driving control, determining a pattern of rotation of the steering wheel according to the calculated vehicle behavior, and causing the steering wheel to rotate in the determined pattern of rotation.

BRIEF DESCRIPTION OF DRAWINGS

[Fig. 1] Fig. 1 is a block diagram illustrating an example of a vehicle behavior transmission device according to a first embodiment of the present invention.
[Fig. 2] Fig. 2 is a schematic diagram illustrating an example of indication unit according to the first embodiment of the present invention.
[Fig. 3] Fig. 3(a) is a cross-sectional view taken along direction A-A in Fig. 2, and Fig. 3(b) is a cross-sectional view taken along direction B-B in Fig. 2.
[Fig. 4] Fig. 4(a) is a different cross-sectional view taken along direction A-A in Fig. 2, and Fig. 4(b) is a different cross-sectional view taken along direction B-B in Fig. 2.
[Fig. 5] Fig. 5 is a schematic diagram for illustrating an example of a method of transmitting vehicle behavior according to the first embodiment of the present invention.
[Fig. 6] Fig. 6(a) is a top view of a vehicle and its vicinity for illustrating the example of the method of transmitting the vehicle behavior according the first embodiment of the present invention, and Fig. 6(b) is a side view of the vehicle and its vicinity for illustrating the example of the method of transmitting the vehicle behavior according to the first embodiment of the present invention.
[Fig. 7] Fig. 7 is a schematic diagram for illustrating the example of the method of transmitting the vehicle behavior according to the first embodiment of the present invention.
[Fig. 8] Fig. 8(a) to Fig. 8(c) are schematic diagrams for illustrating the example of the method of transmitting the vehicle behavior according to the first embodiment of the present invention.
[Fig. 9] Fig. 9(a) to Fig. 9(c) are schematic diagrams for illustrating a different example of the method of transmitting the vehicle behavior according to the first embodiment of the present invention.

[Fig. 10] Fig. 10(a) and Fig. 10(b) are schematic diagrams illustrating a different example of the indication unit according to the first embodiment of the present invention.

[Fig. 11] Fig. 11 is a schematic diagram for illustrating a method of cancelling a rotation angle of a steering wheel according to the first embodiment of the present invention.

[Fig. 12] Fig. 12 is a flowchart for illustrating the example of the method of transmitting the vehicle behavior according to the first embodiment of the present invention.

[Fig. 13] Fig. 13 is a block diagram illustrating an example of a vehicle behavior transmission device according to a second embodiment of the present invention.

[Fig. 14] Fig. 14 is a schematic diagram for illustrating an example of a method of transmitting the vehicle behavior according to the second embodiment of the present invention.

[Fig. 15] Fig. 15(a) to Fig. 15(c) are schematic diagrams for illustrating the example of the method of transmitting the vehicle behavior according to the second embodiment of the present invention.

[Fig. 16] Fig. 16(a) and Fig. 16(b) are schematic diagrams for illustrating a different example of the method of transmitting the vehicle behavior according to the second embodiment of the present invention.

[Fig. 17] Fig. 17 is a schematic diagram for illustrating the example of the method of transmitting the vehicle behavior according to the second embodiment of the present invention.

[Fig. 18] Fig. 18 is a flowchart for illustrating the example of the method of transmitting the vehicle behavior according to the second embodiment of the present invention.

DESCRIPTION OF EMBODIMENTS

Next, first and second embodiments of the present invention will be described with reference to the drawings. In the description of the drawings below, identical or similar parts are labeled with identical or similar reference signs.

[First Embodiment]

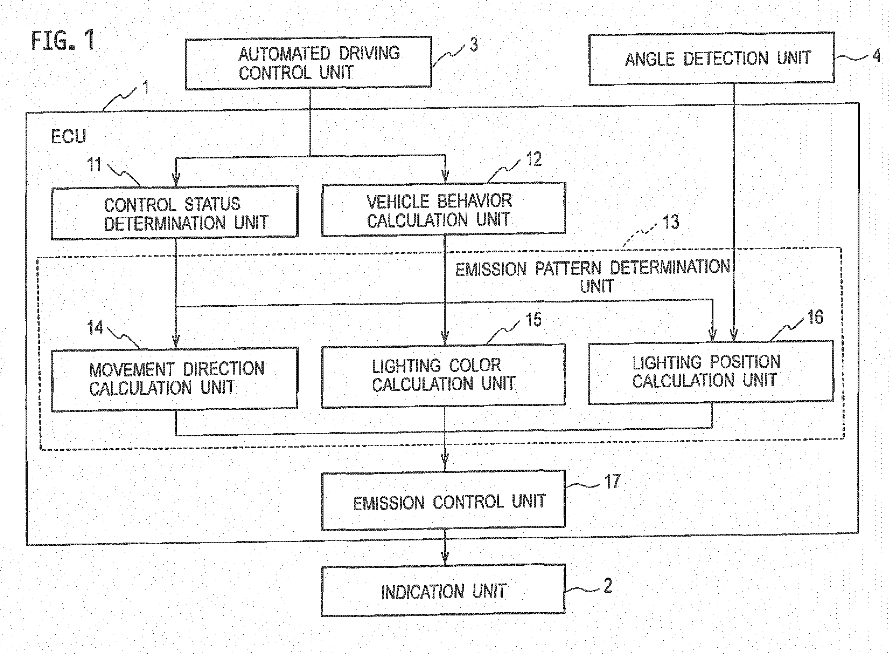

A vehicle behavior transmission device according to the first embodiment of the present invention is applicable to automated driving vehicles which are capable of automatically controlling vehicle behavior. As shown in Fig. 1, the vehicle behavior transmission device according to the first embodiment of the present invention is provided with an engine control unit (ECU) 1, indication unit (steering wheel) 2, automated driving control unit 3, and angle detection unit 4.

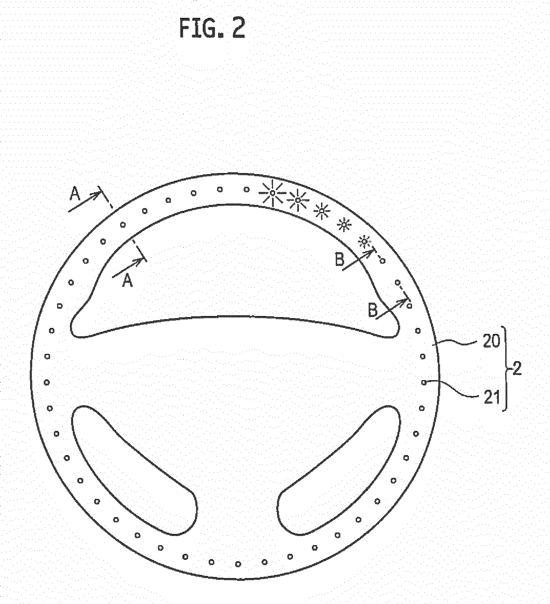

As shown in Fig. 2, the indication unit 2 includes a grip portion 20, which is an outer peripheral portion of the steering wheel 2, and light sources 21 disposed on the grip portion 20. The light sources 21 are, for example, multiple light-emitting elements. A line of point light sources is formed by arranging the multiple light-emitting elements in a row on the grip portion 20. The indication unit 2 indicates the vehicle behavior to an occupant by causing the light sources (light-emitting elements) 21 to emit light in a light-emitting pattern corresponding to the vehicle behavior during automated driving control. Light-emitting diodes (LEDs) and the like are available as the light-emitting elements 21. Types, sizes, the number and the like of the light-emitting elements 21 are not particularly limited. Disposing a large number of light-emitting elements 21 allows the occupant to visually recognize the light-emitting points as if a light-emitting point (a light-emitting part) were moving continuously.

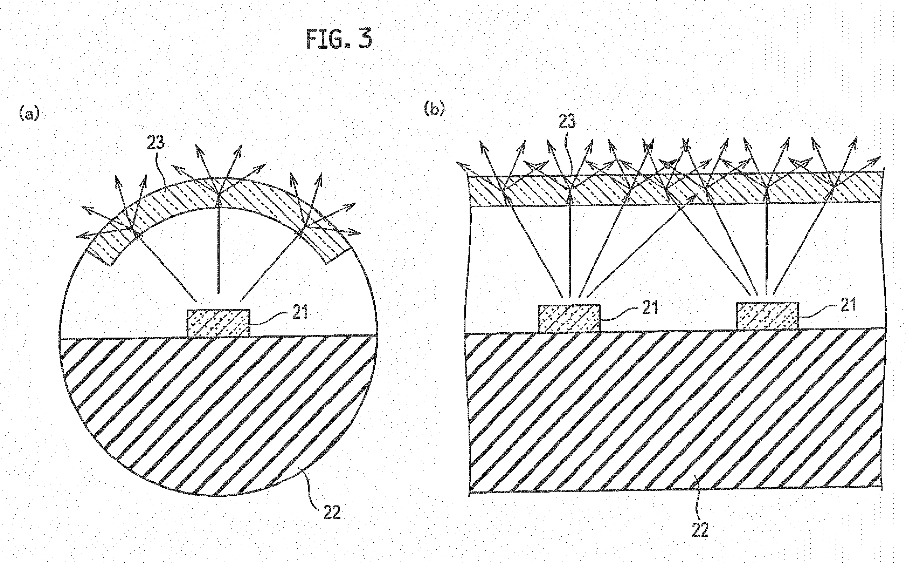

In the indication unit 2, for example, the light-emitting elements 21 are disposed on a support member 22, and a diffusion member 23 is disposed to cover the light-emitting elements 21, as shown in Fig. 3(a) and Fig. 3(b). When light emitted from adjacent light-emitting elements 21 is incident on the diffusion member 23, the light diffuses and mixes together. As a result, it becomes easy to allow the occupant to visually recognize the light-emitting points as if a light-emitting point were moving continuously.

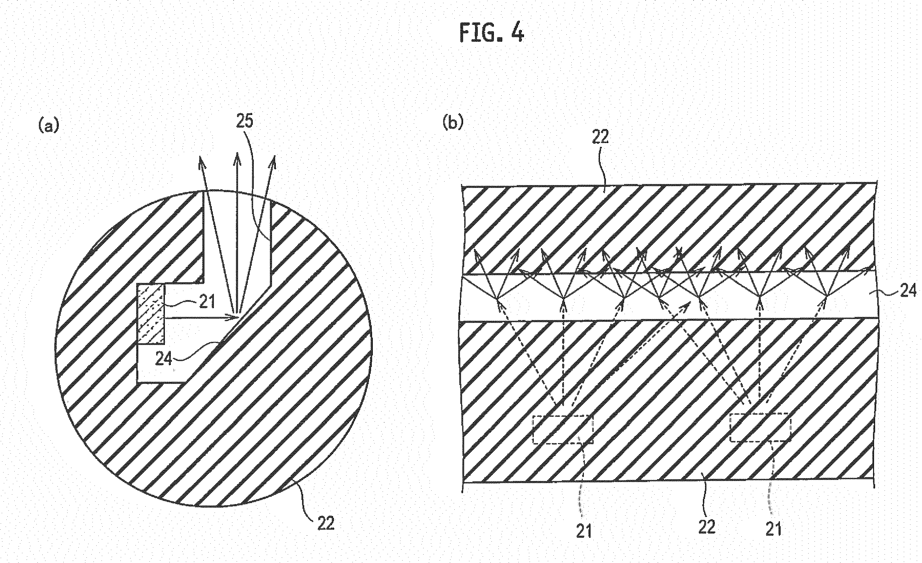

Moreover, in indication unit 2, the light-emitting elements 21 may be disposed inside the support portion 22, and a reflector 24 which reflects the light emitted from the light-emitting elements 21 may be provided, so that the light emitted from the light-emitting elements 21 will not travel directly to the occupant, as shown in Fig. 4(a) and Fig. 4(b). It is possible to mix together the light emitted from the adjacent light-emitting elements 21 by using a material which diffuses light as the reflector 24. The light reflected by the reflector 24 is emitted through a slit 25. Consequently, it is possible to produce light with a low spatial frequency, visibility of which is not reduced in a peripheral view. In addition, movement of the light-emitting points becomes smooth, and thus the occupant is allowed to visually recognize the movement as that of one light-emitting point.

The automated driving control unit 3 is formed of an ECU and the like, and controls automated driving based on a travel plan. Automated driving control unit 3 outputs the travel plan (travel route) to the ECU 1.

The ECU 1 shown in Fig. 1 is formed of a microcontroller provided with a central processing unit (CPU), a memory, and an input/output unit, and forms multiple information processing units which function as vehicle behavior transmission devices by executing a pre-installed computer program. The multiple information processing units of the ECU 1 include a control status determination unit 11, a vehicle behavior calculation unit 12, an emission pattern determination unit 13, and an emission control unit 17.

The control status determination unit 11 determines whether a current vehicle control status is automated driving control or not (manual drive) based on an output of the automated driving control unit 3, a gripping state of the steering wheel, and the like. Based on the travel plan outputted by the automated driving control unit 3, the vehicle behavior calculation unit 12 calculates the vehicle behavior during automated driving control which occurs in an interval from the current to a time after the elapse of a predetermined period of time (for example, after three to seven seconds).

The emission pattern determination unit 13 determines a pattern of emission of the light sources 21 corresponding to the vehicle behavior calculated by the vehicle behavior calculation unit 12. The emission pattern determination unit 13 includes a movement direction calculation unit 14, a lighting color calculation unit 15, and a lighting position calculation unit 16. The movement direction calculation unit 14 calculates a direction of movement of the light-emitting points according to the vehicle behavior. The lighting color calculation unit 15 calculates a lighting color of the light-emitting points according to the vehicle behavior. The lighting position calculation unit 16 calculates lighting positions (lighting range) of the light-emitting points on the steering wheel 2 according to the vehicle behavior.

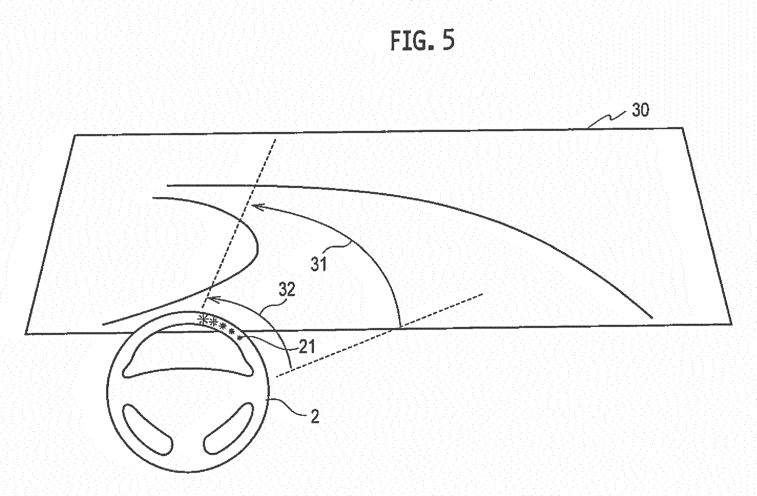

The emission control unit 17 causes the light-emitting elements 21 to emit light in the pattern of emission determined by the emission pattern determination unit 13, and thereby indicates a direction in which the vehicle behavior occurs. For example, as shown in Fig. 5, when a route 31 for the vehicle behavior is a left curve, the light-emitting points of the light-emitting elements 21 indicate such that the light-emitting points moves in a direction shown by an arrow 32 (from right side to left side).

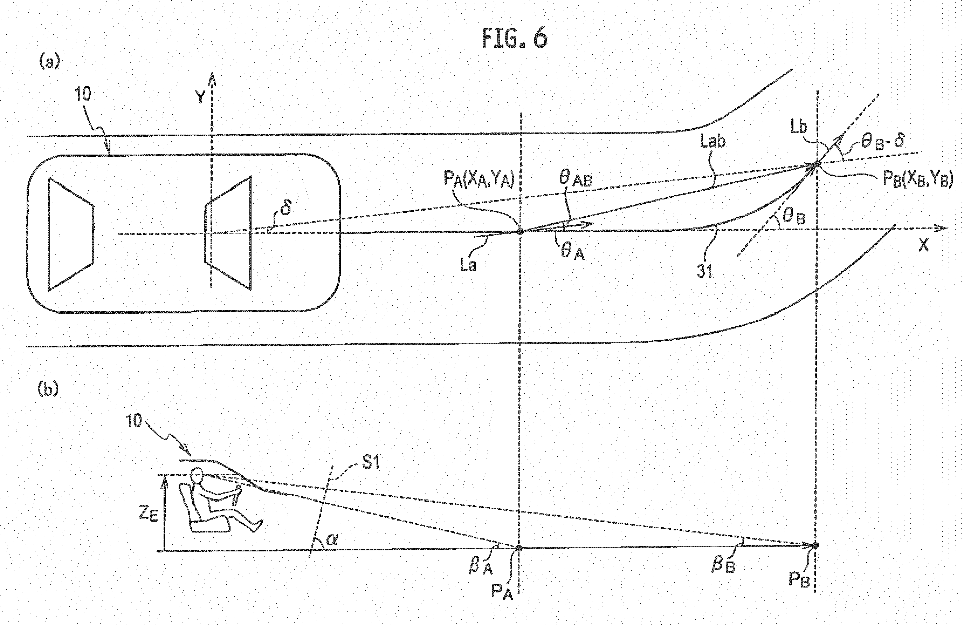

Next, one example of a method of determining the pattern of emission according to the first embodiment of the present invention will be described. First, as shown in Fig. 6(a) and Fig. 6(b), the vehicle behavior calculation unit 12 projects the travel route onto a road surface and estimates a future vehicle trajectory 31 of the center of mass of a vehicle 10 which starts from a point $P_A$ (hereinafter also referred to as the "start point") on the road surface ahead of the vehicle 10, which can be visually recognized from the occupant's viewpoint and is closest to the occupant, and ends at a point $P_B$ (hereinafter also referred to as the "end point") shifted from $P_A$ after a predetermined period of time. As shown in Fig. 6(a) and Fig. 6(b), let a front-facing direction of the vehicle be an X-axis and a left direction be a Y-axis, and denote by $\theta_{AB}$ an angle formed between the X-axis and a line Lab connecting the start point $P_A$ and the end point $P_B$ on the road surface, by $\theta_A$ an angle formed between the X-axis and a tangent line La to the future vehicle trajectory 31 at the point $P_A$, and by $\theta_B$ an angle formed between the X-axis and a tangent line Lb to the future vehicle trajectory 31 at the point $P_B$.

The lighting position calculation unit 16 generates a mapping relationship to represent the vehicle behavior seen from the occupant's viewpoint by projecting, onto a surface S1 parallel to the steering wheel 2, the future vehicle trajectory 31 as the vehicle behavior calculated by the vehicle behavior calculation unit 12. Here, denote by $\alpha$ an angle formed between the road surface and the surface S1 parallel to the steering wheel 2. Then, angles $\theta'_{AB}$, $\theta'_A$, and $\theta'_B$ respectively formed by the line Lab, and the tangent lines La and Lb projected onto the surface S1 are obtained with Formulas (1) to (3) below:

[Math 1]

$$\theta'_{AB} = \tan^{-1} \frac{\sin \theta_{AB}}{\cos \alpha \cos \theta_{AB}} \quad \cdots (1)$$

$$\theta'_A = \tan^{-1} \frac{\sin \theta_A}{\cos \alpha \cos \theta_A} \quad \cdots (2)$$

$$\theta'_B = \tan^{-1} \frac{\sin \theta_B}{\cos \alpha \cos \theta_B} \quad \cdots (3)$$

Meanwhile, the lighting position calculation unit 16 may be capable of projecting the future vehicle trajectory 31 onto a spherical surface the center of which is a position of the occupant's viewpoint. In this case, the angles $\theta'_{AB}$,

$\theta'_A$, and $\theta'_B$ are obtained with Formulas (4) to (6) below, where a lower angle from the start point $P_A$ is denoted by $\beta_A$, a lower angle from the end point $P_B$ by $\beta_B$, and an opening angle at the end point $P_B$ by $\delta$. Thereby, the lighting range of the light points can be determined.

[Math 2]

$$\theta'_{AB} = \tan^{-1}\frac{\sin\theta_{AB}}{\sin\beta_A\cos\theta_{AB}} \quad \cdots (4)$$

$$\theta'_A = \tan^{-1}\frac{\sin\theta_A}{\sin\beta_A\cos\theta_A} \quad \cdots (5)$$

$$\theta'_B = \tan^{-1}\frac{\sin(\theta_B-\delta)}{\sin\beta_B\cos(\theta_B-\delta)} \quad \cdots (6)$$

Here, the lower angle $\beta_A$ from the start point $P_A$, the lower angle $\beta_B$ from the end point $P_B$, and the opening angle $\delta$ at the end point $P_B$, are represented by Formulas (7) to (9) below, respectively, where positional coordinates of the start point $P_A$ are $(X_A, Y_A)$, positional coordinates of the end point $P_B$ are $(X_B, Y_B)$, and a height of the position of the occupant's viewpoint is $Z_E$:

[Math 3]

$$\beta_A = \tan^{-1}\frac{Z_E}{X_A} \quad (Y_A \cong 0) \quad \cdots (7)$$

$$\beta_B = \tan^{-1}\frac{Z_E}{\sqrt{X_B^2 + Y_B^2}} \quad \cdots (8)$$

$$\delta = \tan^{-1}\frac{Y_B}{X_B} \quad \cdots (9)$$

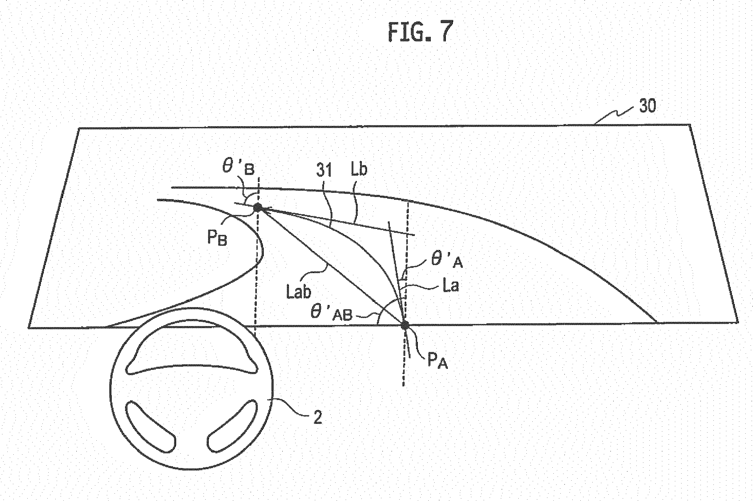

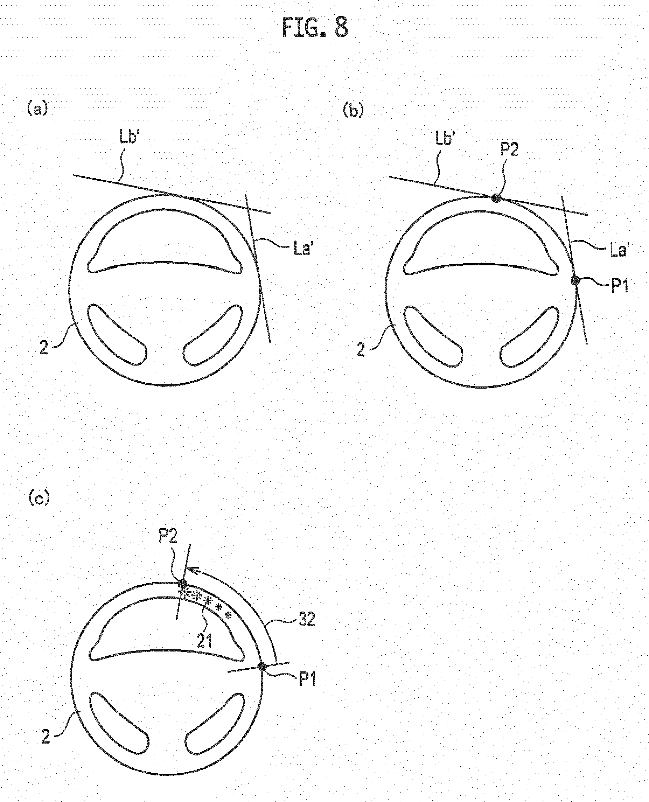

As shown in Fig. 7, the lighting position calculation unit 16 draws the tangent lines La and Lb respectively through the start point $P_A$ and the end point $P_B$ on the future vehicle trajectory 31 which is projected onto the surface S1 parallel to the steering wheel 2, for example. In addition, the lighting position calculation unit 16 parallel-transports the tangent lines La and Lb such that the two lines come into contact with an outer periphery of the steering wheel 2. Then, let the transported lines be La' and Lb', as shown in Fig. 8(a), and obtain contact points P1 and P2 of the tangent lines La' and Lb', respectively, as shown in Fig. 8(b). Thereafter, as shown in Fig. 8(c), the lighting position calculation unit 16 designates a range between the two contact points P1 and P2 as a position of movement of the light-emitting points. Also, as shown in Fig. 8(c), the movement direction calculation unit 14 designates the direction of movement of the light-emitting points as the direction 32 from the contact point P1 to the contact point P2 so that the direction of movement aligns with the direction in which the vehicle behavior occurs.

Suppose that the center of the steering wheel 2 is a position of the own vehicle and an upper end of the steering wheel 2 is a direction of travel in a straight line. When the pattern of emission is determined as shown in Fig. 8(a) to Fig. 8(c), it is possible to present the relationship between the movement of the light-emitting points and the relative vehicle behavior seen from the occupant in such a way as to allow the occupant to easily and intuitively understand the vehicle behavior, by causing the light-emitting points corresponding to the direction of travel to emit light. In addition, the larger the magnitudes of a yaw rate and a lateral acceleration, the longer the range of emission. Hence, it is possible to present the magnitudes of the yaw rate and the lateral acceleration using a length of the range of emission.

Moreover, it is possible to present a velocity of the vehicle by gradually changing the movement velocity of the light-emitting points, depending on the velocity of the vehicle. For example, as the velocity of the vehicle becomes larger, the movement velocity (rate of blinking) of the light-emitting points may become faster. Alternatively, the lighting color calculation unit 15 may present the velocity of the vehicle by gradually changing a lighting color depending on the velocity of the vehicle, for example, by changing the lighting color of the light-emitting points to blue, yellow, and red as the velocity of the vehicle becomes larger. Thereby, it is possible to transmit two or more sets of information to the occupant, such as the magnitudes of the yaw rate and the lateral acceleration, and the velocity of the vehicle in addition to the direction in which the vehicle behavior occurs.

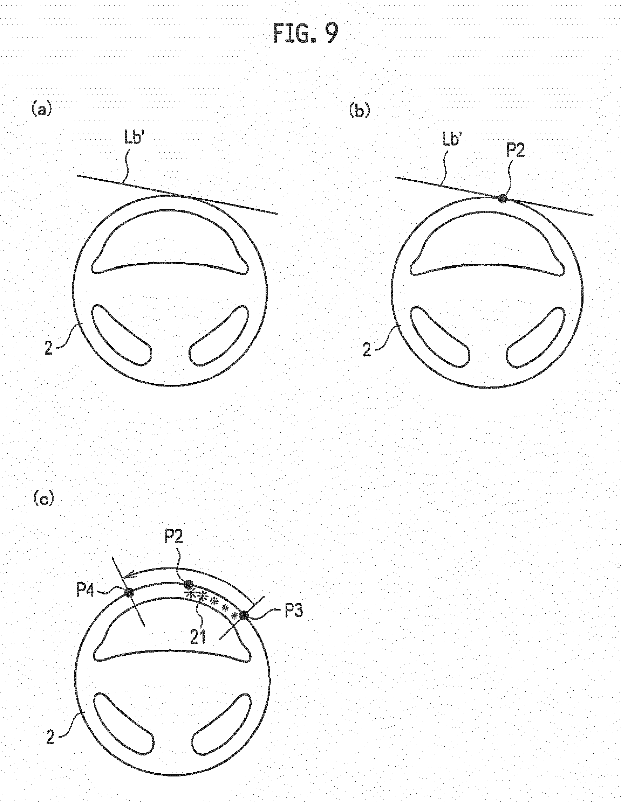

Meanwhile, a different example of a method of determining the lighting positions of the light-emitting points by the lighting position calculation unit 16 will be described. As shown in Fig. 7, the tangent line Lb is drawn through the farthest point $P_B$ on the future vehicle trajectory 31 which is projected onto the surface S1 parallel to the steering wheel 2. The tangent line Lb is parallel-transported so as to come into contact with the outer periphery of the steering wheel 2, and then is denoted by a tangent line Lb' as shown in Fig. 9(a). The contact point P2 is obtained as shown in Fig. 9(b). As shown in Fig. 9(c), the pattern of emission is determined such that the light-emitting points moves within a predetermined range between a start points P3 and an end point P4 having the contact point P2 as the center.

The pattern of emission determined as shown in Fig. 9(a) to Fig. 9(c) allows a wide range of movement of the light-emitting points and thus provides easy visual recognition. Moreover, it is possible to transmit two or more sets of information to the occupant by changing the movement velocity or the length of the range of movement of the light-emitting points according to the magnitudes of the yaw rate and the lateral acceleration, or by causing the lighting color calculation unit 15 to change the lighting color.

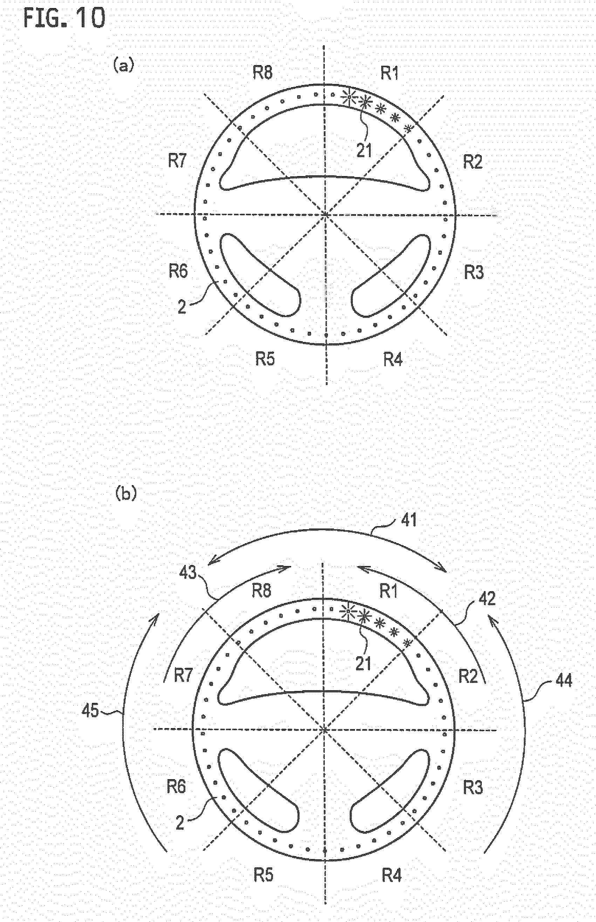

Next, another different example of the method of determining the pattern of emission by the emission pattern determination unit 13 will be described. The emission pattern determination unit 13 may divide the outer periphery (light-emitting parts) of the steering wheel 2 into multiple areas with a predetermined angle, and determine a lighting area according to the traveling trajectory of the vehicle. For example, the outer periphery of the steering wheel 2 is divided into eight lighting areas R1 to R8, as shown in Fig. 10(a).

Then, in the case where the vehicle behavior changes to a large extent as when curving to the right or left, or where a region of travel changes as in a change of traffic lanes; as shown in Fig. 10(b), the light-emitting points are caused to move in the same direction as the direction of travel within the two areas R1 and R8 located at the upper part, as indicated by an arrow 41.

In addition, when a curvature of the curve is relatively small, the light-emitting points are caused to move in a direction of an arrow 42 within the upper-right two areas R1 and R2 in the case where the vehicle is to curve in a left direction, while the light-emitting points are caused to move in a direction of an arrow 43 within the upper-left two areas R7 and R8 in the case where the vehicle is to curve in a right direction.

In addition, when the curve is gentle and thus the curvature of the curve is relatively large, the light-emitting points are caused to move in a direction of an arrow 44 within the lateral two areas R2 and R3 in the case where the vehicle is to curve in the left direction, while the light-emitting points are caused to move in a direction of an arrow 45 within the lateral two areas R6 and R7 in the case where the vehicle is to curve in the right direction.

As described above, the calculation of the vehicle trajectory can be simplified by dividing the outer periphery of the steering wheel 2 into the multiple lighting areas R1 to R8 and by determining the lighting areas according to the traveling trajectory of the vehicle. Thus, it is possible to present the vehicle behavior while reducing a calculation load.

In addition, in the case where the steering wheel 2 of an automated driving vehicle rotates automatically when the vehicle is traveling on a curve, the vehicle behavior and motion of the light-emitting points seen from the occupant do not match if the range of the light-emitting points rotates together with the rotation of the steering wheel 2.

To deal with the situation, the angle detection unit 4 shown in Fig. 1 detects a rotation angle of the steering wheel 2. Based on the rotation angle of the steering wheel 2 detected by the angle detection unit 4, the lighting position calculation unit 16 causes the range of the light-emitting points to move such that an amount of rotation of the steering wheel 2 is cancelled and that the range of the light-emitting points seen from the occupant is constant even when the steering wheel 2 rotates.

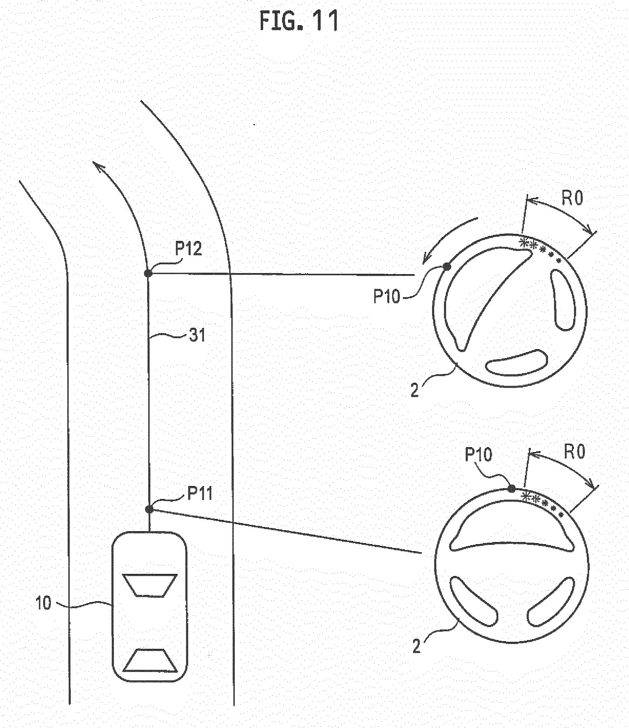

As shown in Fig. 11, the vehicle 10 is travelling at a position P11 on the travel route 31 and, at this moment, the steering wheel 2 is in a neutral position and the upper end 10 is located at the upper part, for example. The light-emitting points are moving within the range R0 because the route 31 ahead is a left curve. When the vehicle 10 travels to reach a position P12 on the travel route 31, the steering wheel 2 rotates in response to the cornering of the vehicle 10. At this moment, the lighting position calculation unit 16 causes the positions of the light-emitting points to move in such a way as to cancel the amount of rotation of the steering wheel 2 and thus maintains the range R0 of the light-emitting points seen from the occupant.

Note that in the determination of the pattern of emission by the emission pattern determination unit 13, it is possible to change a duration of emission, a duration of residual emission, blinking, and the lighting color of the light sources 21, the movement velocity of the light-emitting points, the range of emission, and the number of points simultaneously emitting light. Various forms of indication such as a moving point, a comet with a trailing tail, and a wavy stripe can be made by combining the above.

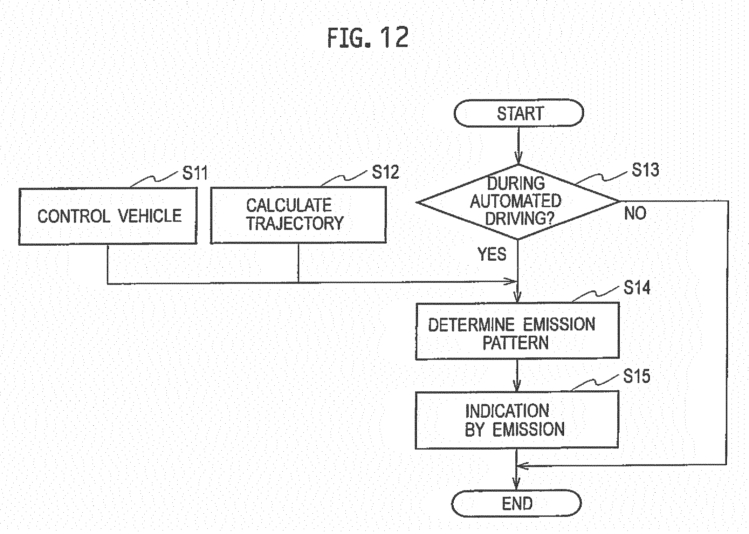

Next, an example of a method of transmitting the vehicle behavior according to the first embodiment of the present invention will be described with reference to Fig. 12.

First, at step S11, the automated driving control unit 3 generates the travel plan and performs automated driving control based on the travel plan. At step S12, based on the travel plan outputted by the automated driving control unit 3, the vehicle behavior calculation unit 12 calculates the driving trajectory as the vehicle behavior by projecting the travel route from the current to the time after the elapse of the predetermined period of time (for example, after three to seven seconds) onto the road surface.

At step S13, the control status determination unit 11 determines whether the automated driving control is being performed by the automated driving control unit 3 or not (manual drive is being performed). Processing terminates if it is determined that the automated driving control is not being performed at step S13. On the other hand, if it is determined that the automated driving control is being performed at step S13, the processing proceeds to step S14.

At step S14, the emission pattern determination unit 13 determines the pattern of emission based on the vehicle behavior calculated by the vehicle behavior calculation unit 12. At step S15, the indication unit 2 causes the light sources 21 disposed on the outer periphery of the steering wheel 2 to emit light in accordance with the pattern of emission determined by the emission pattern determination unit 13. Here, the calculation of the vehicle behavior at step S12 may be performed before a process of determining the pattern of emission at step S14 if it is determined that the automated driving control is being performed at step S13.

According to the first embodiment of the present invention, it is possible to present the vehicle behavior on the steering wheel 2, which is closely related to the vehicle behavior, by presenting the vehicle behavior using the pattern of emission of the light sources 21 disposed on the steering wheel 2. Thus, it is possible to present in advance the vehicle behavior during the automated driving control in such a way as to allow the occupant to intuitively understand the vehicle behavior.

In addition, as for an ordinary vehicle, a steering direction of the steering wheel 2 is the same as the direction in which the vehicle behavior occurs. For this reason, it is possible to allow the occupant to easily understand the direction in which the vehicle behavior occurs by aligning the direction of movement of the light-emitting points with the direction in which the vehicle behavior occurs during the automated driving control by the automated driving control unit 3.

In addition, when the control status of the vehicle changes from automated driving to manual drive due to an intervening operation or the like by the occupant during the automated driving control, the indication unit 2 can indicate information different from the direction in which the vehicle behavior occurs. For this reason, in a manual steering mode, the pattern of emission of the light-emitting points can be controlled according to the rotation angle of the steering wheel 2, for example, not to a future direction in which the vehicle behavior occurs. Thus, it is possible to use the indication unit 2 as a steering angle assistance device in the manual steering mode.

In addition, by changing the lighting color or the movement velocity of the light-emitting points according to the magnitudes of the yaw rate and the lateral acceleration generated due to the automated driving control, it is possible to present the magnitude of the yaw rate or the lateral acceleration generated due to the automated driving control and thus to present a level of a sense of uneasiness for the vehicle behavior. Hence, the occupant can be allowed to prepare for the vehicle behavior in advance.

In addition, as shown in Fig. 8(a) to Fig. 8(c), the tangent lines through the start point and the end point on the vehicle trajectory, seen from the position of the occupant's viewpoint, from the current to the time after the elapse of the predetermined period of time are mapped onto the outer periphery of the steering wheel 2. The lighting positions of the light-emitting points are determined such that the lighting positions move between the contact points of the mapped tangent lines with the steering wheel 2. Thus, the magnitude of the vehicle behavior is indicated with the length of the range of movement of the light-emitting points, and a gradient of a tip end of the light-emitting points represents the direction in which the vehicle behavior occurs. Hence, the two sets of information can be transmitted.

In addition, as shown in Fig. 9(a) to Fig. 9(b), the tangent line to the vehicle trajectory, seen from the position of the occupant's viewpoint, from the current to the time after the elapse of the predetermined period of time is mapped onto the outer periphery of the steering wheel 2. The lighting positions of the light-emitting points are determined such that the lighting positions move within the predetermined range having the contact point of the mapped tangent line with the steering wheel 2 as the center. Thus, it is possible to transmit information in a peripheral view because a direction of the vehicle behavior is represented by a gradient of the light-emitting points from the start points P3 to the end points P4 while maintaining to some extent the range of movement of the light-emitting points. Moreover, by changing the length of the range of movement of the light-emitting points of the light sources 21 according to the magnitude of the yaw rate or the lateral acceleration, it is possible to indicate the magnitude of the yaw rate or the lateral acceleration in addition to the direction in which the vehicle behavior occurs. Hence, the two sets of information can be transmitted.

In addition, as shown in Fig. 10(a) and Fig. 10(b), the outer periphery of the steering wheel 2 is divided into the multiple areas, and the areas within which the light-emitting points move are determined among the multiple areas, according to the vehicle behavior. Thus, it is possible to simplify the calculation of the range of movement of the light-emitting points and to reduce the load on the lighting position calculation unit 16. Here, areas to be caused to emit light can be selected among the multiple areas after the light-emitting parts of the light sources 21 are divided into the multiple areas, even in the case where the light sources 21 are in a position different from the outer periphery of the steering wheel 2.

In addition, as shown in Fig. 11, the lighting positions of the light-emitting points are moved, according to the rotation angle of the steering wheel 2 detected by the angle detection unit 4, such that the lighting positions seen from the occupant are maintained even when the steering wheel 2 rotates. Thus, the range of emission R0 seen from the occupant does not change even when the steering wheel 2 rotates during a curve or the like. Hence, a correlation between a gradient of the range of emission R0 and the direction of the vehicle behavior can be maintained.

In addition, it is possible to diffuse and combine the light from the multiple light-emitting elements 21 by providing the diffusion member 23 shown in Fig. 3(a) and Fig. 3(b) and the reflector 24 shown in Fig. 4(a) and Fig. 4(b). Hence, the occupant can visually recognize the light-emitting points as if a light-emitting point were moving smoothly.

A variable gear-ratio steering (VGR) device which changes a reduction ratio between the angle of the steering wheel 2 and a turning angle may be provided. Alternatively, a steer-by-wire (SBW) device which electrically controls the turning angle based on the operation of the steering wheel 2 may be provided, where a mechanical connection between the steering wheel 2 and a turning wheel is cut off. In those cases, the vehicle behavior can be indicated by moving the light-emitting points while performing the automated driving control, with the rotation angle of the steering wheel 2 fixed. Consequently, it is possible to prevent for safety the rotation of the steering wheel 2 during the automated driving control, and at the same time to notify the occupant of the motion of the vehicle using the motion of the light-emitting points on the steering wheel 2.

In addition, it is possible to determine the pattern of emission corresponding to the vehicle behavior by projecting the vehicle trajectory from the current to the time after the elapse of the predetermined period of time onto the plane S1 including the outer periphery of the steering wheel 2, or by projecting that vehicle trajectory onto the spherical surface the center of which is the position of the occupant's viewpoint.

In the first embodiment of the present invention, the case was described where the light sources (light-emitting elements) 21 are disposed on the grip portion 20, which is the outer peripheral portion of the steering wheel 2. Here, the position to dispose the light sources 21 is not particularly limited as long as the occupant can visually recognize that position on the steering wheel 2. For example, the light sources (light-emitting elements) 21 may be disposed in a center portion of the steering wheel 2. Also, the case was described which includes the line of point light sources as the light sources 21 formed by arranging the multiple light-emitting elements. Here, a type of the light sources 21 is not particularly limited. As the light sources 21 may be those that allow the occupant to visually recognize the light-emitting parts as if a light-emitting part were moving.

[Second Embodiment]

A vehicle behavior transmission device according to a second embodiment of the present invention is a function achieved by combining: a steering device capable of freely controlling a relationship between the turning angle of the turning wheel (for example, a front wheel) and the steering angle of the steering wheel; and the automated driving control unit capable of automatically controlling the behavior of the own vehicle. As examples of the steering device capable of freely controlling the relationship between the turning angle of the front wheel and the steering angle of the steering wheel, given are the variable gear-ratio steering (VGR) device capable of changing the reduction ratio between the angle of the steering wheel and the turning angle, and the steer-by-wire (SBW) device which electrically controls the turning angle based on the operation of the steering wheel, where the mechanical connection between the steering wheel and the turning wheel is cut off.

During the automated driving control, the direction of the vehicle behavior indicated by an orientation of the steering wheel allows the occupant to prepare for the vehicle behavior. Here, when control is performed such that the vehicle behavior after a predetermined period of time is shown based on a drive plan by the automated driving control unit, the occupant is allowed to prepare for the actual vehicle behavior before it occurs. Thus, it is possible to prevent motion sickness and the sense of unease.

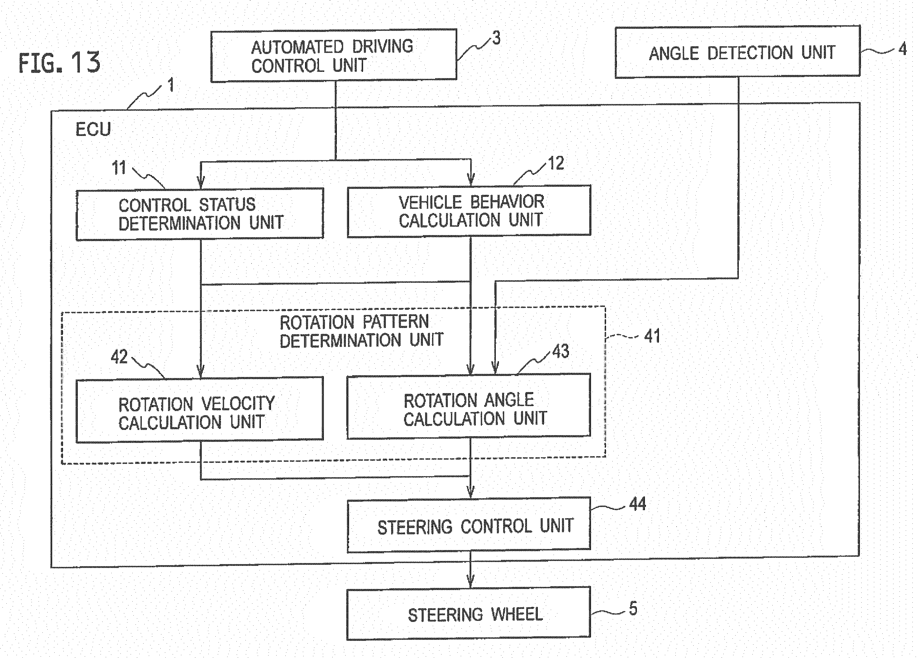

As shown in Fig. 13, the vehicle behavior transmission device according to the second embodiment of the present invention is provided with the ECU 1, the automated driving control unit 3, the angle detection unit 4, and steering means 5. Assume that, besides the steering wheel, the steering means 5 includes a steering device capable of freely controlling the relationship between the turning angle of the turning wheel and the steering angle of the steering wheel, such as the VGR device or the SBW device. The ECU 1 includes a rotation pattern determination unit 41 and a steering control unit 44, instead of the emission pattern determination unit 13 and the emission control unit 17 shown in Fig. 1.

The rotation pattern determination unit 41 determines a pattern of rotation (pattern of steering) of a steering wheel 5 according to the vehicle behavior calculated by the vehicle behavior calculation unit 12. The rotation pattern determination unit 41 includes a rotation velocity calculation unit 42 which calculates a rotation velocity of the steering wheel 5 and a rotation angle calculation unit 43 which calculates a rotation angle of the steering wheel 5.

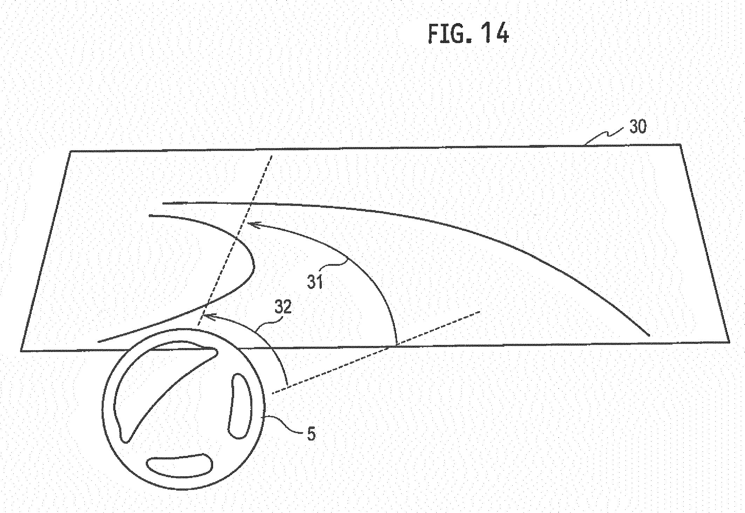

The steering control unit 44 presents to the occupant the direction in which the vehicle behavior occurs by rotating (steering) the steering wheel 5 in accordance with the pattern of rotation determined by the rotation pattern determination unit 41. For example, as shown in Fig. 14, when the route 31 for the vehicle behavior is a left curve, the steering wheel 5 is rotated in the direction shown by the arrow 32. Here, with the indication of a travel direction vector of the vehicle at a position on an upper end of the steering wheel 5 (a direction from the center to the upper end of the steering wheel 5), the occupant is allowed to learn a relative travel direction in his/her front view. Also, the rotation angle is almost certainly in a range from -90 to +90 degrees. Thus, it is possible to reduce a risk, for example, that the hand might be caught in the steering wheel 5 when the steering wheel 5 rotates.

Next, a method of determining the pattern of rotation of the steering wheel 5 according to the second embodiment of the present invention will be described. First, as in the case of the first embodiment of the present invention shown in Fig. 6(a) and Fig. 6(b), the vehicle behavior calculation unit 12 calculates the future vehicle trajectory 31 from the current to a time after the elapse of a predetermined period of time (for example, after 0.3 to 3 seconds). As shown in Fig. 7, the rotation angle calculation unit 43 projects the future vehicle trajectory 31 onto a position seen from the occupant. As in the case of the first embodiment of the present invention, a method of projecting onto the surface S1 parallel to the steering wheel 5, and a method of projecting onto a surface the center of which is a position of the occupant's viewpoint can be employed as projection methods.

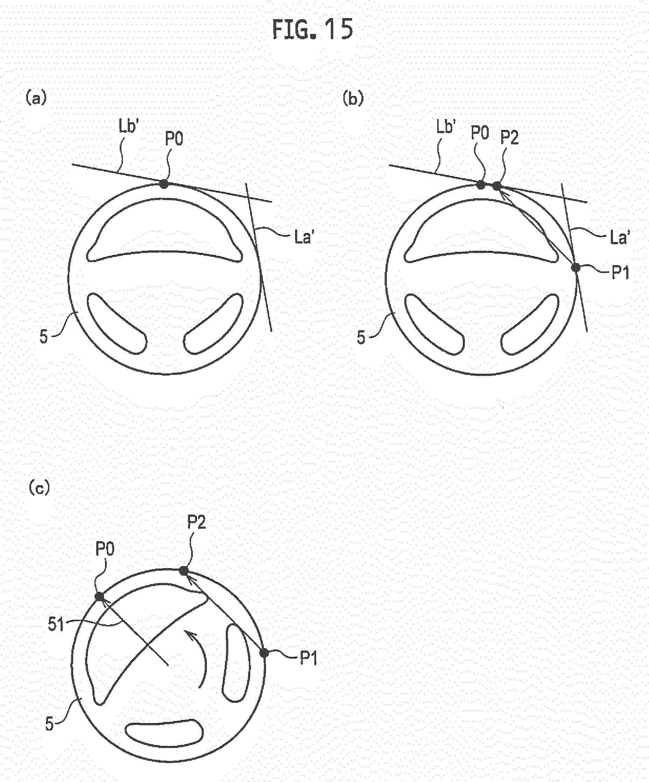

Subsequently, the rotation angle calculation unit 43 parallel-transports the tangent lines La and Lb through the start point $P_A$ and the end point $P_B$ on the future vehicle trajectory such that the two lines come into contact with an outer periphery of the steering wheel 5. Then, let the transported lines be tangent lines La' and Lb', as shown in Fig. 15(a), and obtain the contact points P1 and P2, as shown in Fig. 15(b). Thereafter, suppose that the center of the steering wheel 5 is the position of the own vehicle and an upper end P0 on the outer periphery of the steering wheel 5 is the direction of travel in a straight line, as shown in Fig. 15(c). The rotation angle calculation unit 43 calculates the rotation angle of the steering wheel 5 such that the upper end P0 on the outer periphery of the steering wheel 5 aligns with the travel direction vector connecting the two contact points P1 and P2.

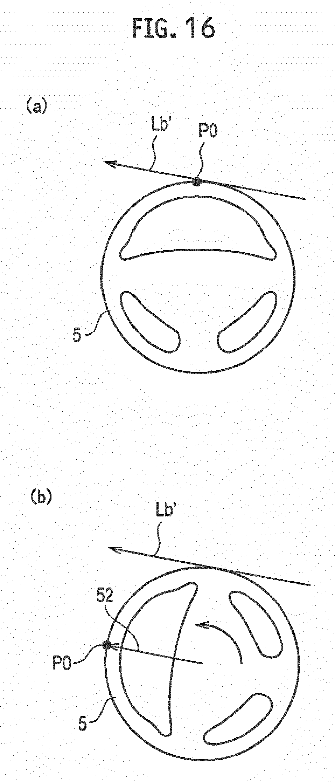

Meanwhile, a different example of a method of calculating the rotation angle by the rotation angle calculation unit 43 will be described. As shown in Fig. 16(a), the tangent line Lb' through the end point $P_B$ on the future vehicle trajectory is parallel-transported so as to come into contact with the outer periphery of the steering wheel 5. As shown in Fig. 16(b), the rotation angle of the steering wheel 5 is calculated such that a direction of travel of the tangent line Lb' and the upper end P0 on the steering wheel 5 point in the same direction.

In addition, the rotation angle calculation unit 43 may change the rotation angle of the steering wheel 5 according to the yaw rate or the lateral acceleration. For example, the rotation angle of the steering wheel 5 is made larger as the yaw rate or the lateral acceleration becomes larger.

In addition, the rotation velocity calculation unit 42 calculates the rotation velocity of the steering wheel 5 according to the vehicle behavior. For example, the rotation velocity of the steering wheel 5 may be made larger as the yaw rate or the lateral acceleration becomes larger.

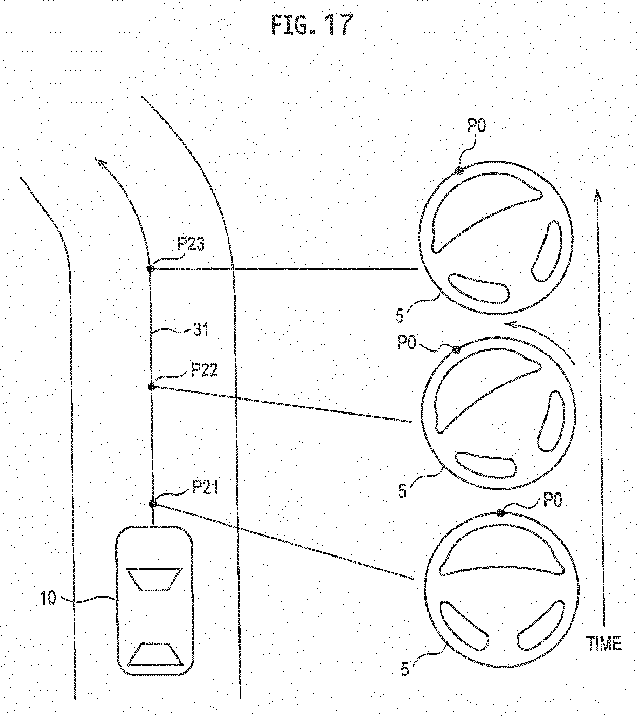

Fig. 17 illustrates states of the steering wheel 5 at positions P21, P22, and P23 on the drive trajectory 31 while the vehicle 10 is travelling along the driving trajectory 31. When the vehicle 10 is travelling at the position P21, the steering wheel 5 is in the neutral position, and the upper end P0 is located at the upper part. When the vehicle 10 reaches the position P22, the steering wheel 5 rotates since the vehicle 10 is approaching a left curve, and the travel direction vector of the vehicle is presented in the direction from the center to the upper end P0 of the steering wheel 5.

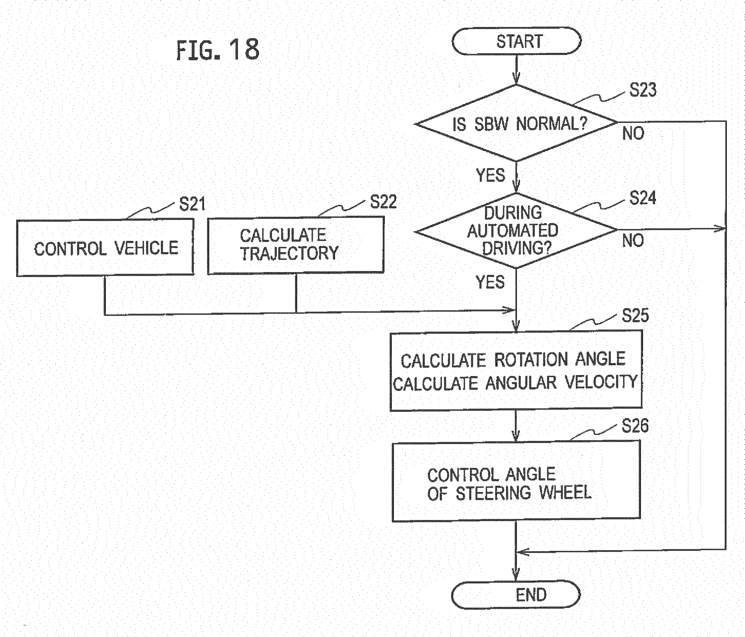

Next, an example of a method of transmitting the vehicle behavior according to the second embodiment of the present invention will be described with reference to Fig. 18.

First at step S21, the automated driving control unit 3 generates the travel plan and performs the automated driving control in accordance with the travel plan. At step S22, the vehicle behavior calculation unit 12 calculates the vehicle behavior from the current to the time after the elapse of the predetermined period of time based on the travel plan outputted by the automated driving control unit 3.

At step S23, the control status determination unit 11 determines whether the SBW is normal or not. Processing terminates if it is determined that the SBW is not normal at step S23. On the other hand, if it is determined that the SBW is normal at step S23, the processing proceeds to step S24.

At step S24, the control status determination unit 11 determines whether or not the automated driving control is being performed by the automated driving control unit 3. If it is determined that the automated driving control is not being performed at step S24, the processing terminates since the manual drive is being performed. On the other hand, if it is determined that the automated driving control is being performed at step S24, the processing proceeds to step S25.

At step S25, the rotation angle calculation unit 43 calculates the rotation angle of the steering wheel 5 according to the vehicle behavior calculated by the vehicle behavior calculation unit 12. Moreover, the rotation velocity calculation unit 42 calculates the rotation angular velocity of the steering wheel 5 according to the vehicle behavior calculated by the vehicle behavior calculation unit 12. At step S26, the steering control unit 44 controls the steering wheel 5 at the rotation angle and the rotation angular velocity respectively calculated by the rotation angle calculation unit 43 and the rotation velocity calculation unit 42.

According to the second embodiment of the present invention, the vehicle behavior can be presented with the state of the steering wheel 5, which is closely related to the vehicle behavior. Thus, it is possible to present in advance the vehicle behavior in such a way as to allow the occupant to easily and intuitively understand the vehicle behavior.

In addition, the direction of the future vehicle behavior presented based on the future vehicle trajectory allows the occupant to recognize in advance and prepare for the future vehicle behavior. Moreover, when the future vehicle behavior does not match the intention of the occupant, it is possible to shift to an operation to cancel an automated driving task before the vehicle behavior occurs.

In addition, by changing the rotation angle of the steering wheel according to the yaw rate or the lateral acceleration, it is possible to present the yaw rate or the lateral acceleration in addition to the direction in which the vehicle behavior occurs.

As above, content of the present invention has been described along with the first and second embodiments of the present invention. It is obvious to those skilled in the art that the present invention is not limited to these descriptions, and that various modifications and improvements are possible within the scope of the appendant claims.

REFERENCE SIGNS LIST

| | |
|---|---|
| 1 | engine control unit (ECU) |
| 2, 5 | indication unit (steering wheel) |
| 3 | automated driving control unit |
| 4 | angle detection unit |
| 10 | vehicle |
| 11 | control status determination unit |
| 12 | vehicle behavior calculation unit |
| 13 | emission pattern determination unit |
| 14 | movement direction calculation unit |
| 15 | lighting color calculation unit |
| 16 | lighting position calculation unit |
| 17 | emission control unit |
| 20 | grip portion |
| 21 | light source (light-emitting element) |
| 22 | support portion |
| 23 | diffusion member |
| 41 | rotation pattern determination unit |
| 42 | rotation velocity calculation unit |
| 43 | rotation angle calculation unit |
| 44 | steering control unit |

**Claims**

1. A vehicle behavior transmission device, comprising:

   a vehicle behavior calculation unit (12) configured to calculate a future vehicle trajectory;
   a light source (21) disposed on a steering wheel (2) of an automated driving vehicle; and
   an emission pattern determination unit (13) configured to determine a light-emitting part of the light source (21) based on the calculated future vehicle trajectory,
   **characterized in that**
   the vehicle behavior calculation unit (12) calculates the future vehicle trajectory based on a travel plan of the automated driving vehicle; and

the emission pattern determination unit (13) determines the light-emitting part of the light source (21) based on the future vehicle trajectory from a current to a time after elapse of a predetermined period of time.

2. The vehicle behavior transmission device according to claim 1, wherein
the emission pattern determination unit (13) causes the light-emitting part of the light source (21) to move based on the future vehicle trajectory.

3. The vehicle behavior transmission device according to claim 1 or 2, further comprising
a control status determination unit (11) configured to determine whether or not the automated driving vehicle is performing the automated driving control, wherein
when it is determined that the automated driving control is not being performed, the light-emitting part of the light source (21) indicates information different from the future vehicle trajectory.

4. The vehicle behavior transmission device according to any one of claims 1 to 3, wherein
the emission pattern determination unit (13) determines a lighting color of the light source (21) according to a magnitude of a yaw rate or a magnitude of a lateral acceleration.

5. The vehicle behavior transmission device according to any one of claims 1 to 4, wherein
the emission pattern determination unit (13) determines a movement velocity of the light-emitting part of the light source (21) according to a magnitude of a yaw rate or a magnitude of a lateral acceleration.

6. The vehicle behavior transmission device according to any one of claims 1 to 5, wherein
the light-emitting part of the light source (21) is an outer periphery of the steering wheel (2).

7. The vehicle behavior transmission device according to claim 6, wherein
the emission pattern determination unit (13) maps, onto the outer periphery of the steering wheel (2), tangent lines through a start point and an end point on the future vehicle trajectory from the current to the time after the elapse of the predetermined period of time, and determines the light-emitting part of the light source (21) such that the light-emitting part moves between contact points of the mapped tangent lines with the steering wheel (2).

8. The vehicle behavior transmission device according to claim 6, wherein
the emission pattern determination unit (13) maps, onto the outer periphery of the steering wheel (2), a tangent line to the future vehicle trajectory from the current to the time after the elapse of the predetermined period of time, and determines the light-emitting part of the light source (21) such that the light-emitting part moves within a predetermined range having a contact point of the mapped tangent line with the steering wheel (2) as a center.

9. The vehicle behavior transmission device according to claim 8, wherein
the emission pattern determination unit (13) determines a range of movement of the light-emitting part according to the magnitude of the yaw rate or the magnitude of the lateral acceleration.

10. The vehicle behavior transmission device according to claim 6, wherein
the emission pattern determination unit (13) divides the light-emitting part of the light source (21) of the steering wheel (2) into a plurality of areas, and
determines, among the plurality of areas, an area within which the light-emitting part is moved according to the future vehicle trajectory.

11. The vehicle behavior transmission device according to any one of claims 1 to 4, further comprising
an angle detection unit (4) configured to detect a rotation angle of the steering wheel (2), wherein
the emission pattern determination unit (13) causes the light-emitting part of the light source (21) to move according to the rotation angle of the steering wheel (2) detected by the angle detection unit (4), such that a lighting position is maintained even when the steering wheel (2) rotates.

12. The vehicle behavior transmission device according to any one of claims 1 to 11, wherein
the light source (21) is covered with a diffusion member which diffuses light.

13. The vehicle behavior transmission device according to any one of claims 1 to 11, wherein
a reflector (24) which reflects light from the light source (21) is provided inside the steering wheel (2) to allow the occupant to visually recognize the light reflected from the reflector (24) through a slit (25).

**14.** The vehicle behavior transmission device according to any one of claims 1 to 13, comprising
a variable gear-ratio steering device which changes a reduction ratio between the angle of the steering wheel (2) and a turning angle, wherein
the automated driving control is performed with the rotation angle of the steering wheel (2) fixed and the light-emitting part of the light source (21) is moved.

**15.** The vehicle behavior transmission device according to any one of claims 1 to 13, comprising
a steer-by-wire device which electrically controls a turning angle based on an operation of the steering wheel (2) while a mechanical connection between the steering wheel (2) and a turning wheel is cut off, wherein
the automated driving control is performed with the angle of the steering wheel (2) fixed and the light-emitting part of the light source (21) is moved.

**16.** The vehicle behavior transmission device according to claim 1, further comprising:

a steering control unit (44) configured to freely control a relationship between a turning angle of a turning wheel of the automated driving vehicle and a steering angle of the steering wheel (5); and
a rotation pattern determination unit (41) configured to determine a rotation angle of the steering wheel (5) based on the calculated future vehicle trajectory.

**17.** The vehicle behavior transmission device according to claim 16, wherein
the rotation pattern determination unit (41) indicates, at a position on an upper end of the steering wheel (5), orientations from a start point to an end point on the future vehicle trajectory from a current to a time after elapse of a predetermined period of time.

**18.** The vehicle behavior transmission device according to claim 16, wherein
the rotation pattern determination unit (41) changes the rotation angle of the steering wheel (5) according to a yaw rate or a lateral acceleration.

**Patentansprüche**

**1.** Fahrzeugverhaltensübertragungsvorrichtung, umfassend:

eine Fahrzeugverhaltensberechnungseinheit (12), die dazu ausgelegt ist, eine zukünftige Fahrzeugbewegungsbahn zu berechnen;
eine Lichtquelle (21), die an einem Lenkrad (2) eines automatisiert fahrenden Fahrzeugs angeordnet ist; und
eine Emissionsmusterbestimmungseinheit (13), die dazu ausgelegt ist, einen Lichtemissionsteil der Lichtquelle (21) basierend auf der berechneten zukünftigen Fahrzeugbewegungsbahn zu bestimmen,
**dadurch gekennzeichnet, dass**
die Fahrzeugverhaltensberechnungseinheit (12) die zukünftige Fahrzeugbewegungsbahn basierend auf einem Reiseplan des automatisiert fahrenden Fahrzeugs berechnet; und
die Emissionsmusterbestimmungseinheit (13) den Lichtemissionsteil der Lichtquelle (21) basierend auf der zukünftigen Fahrzeugbewegungsbahn ab einer aktuellen Zeit bis zu einer Zeit nach Verstreichen einer vorgegebenen Zeitspanne bestimmt.

**2.** Fahrzeugverhaltensübertragungsvorrichtung nach Anspruch 1, wobei
die Emissionsmusterbestimmungseinheit (13) den Lichtemissionsteil der Lichtquelle (21) dazu veranlasst, sich basierend auf der zukünftigen Fahrzeugbewegungsbahn zu bewegen.

**3.** Fahrzeugverhaltensübertragungsvorrichtung nach Anspruch 1 oder 2, des Weiteren umfassend
eine Steuerungsstatusbestimmungseinheit (11), die zum Bestimmen eingerichtet ist, ob das automatisiert fahrende Fahrzeug die automatisierte Fahrsteuerung ausführt oder nicht, wobei
wenn bestimmt wird, dass die automatisierte Fahrsteuerung nicht durchgeführt wird, der Lichtemissionsteil der Lichtquelle (21) Informationen anzeigt, die von der zukünftigen Fahrzeugbewegungsbahn abweichen.

**4.** Fahrzeugverhaltensübertragungsvorrichtung nach einem der Ansprüche 1 bis 3, wobei

die Emissionsmusterbestimmungseinheit (13) eine Beleuchtungsfarbe der Lichtquelle (21) entsprechend einer Größe der Giergeschwindigkeit oder einer Größe der Querbeschleunigung bestimmt.

5. Fahrzeugverhaltensübertragungsvorrichtung nach einem der Ansprüche 1 bis 4, wobei die Emissionsmusterbestimmungseinheit (13) eine Bewegungsgeschwindigkeit des Lichtemissionsteils der Lichtquelle (21) entsprechend einer Größe der Giergeschwindigkeit oder einer Größe der Querbeschleunigung bestimmt.

6. Fahrzeugverhaltensübertragungsvorrichtung nach einem der Ansprüche 1 bis 5, wobei der Lichtemissionsteil der Lichtquelle (21) ein Außenumfang des Lenkrades (2) ist.

7. Fahrzeugverhaltensübertragungsvorrichtung nach Anspruch 6, wobei die Emissionsmusterbestimmungseinheit (13) dem Außenumfang des Lenkrades (2) Tangentenlinien durch einen Anfangspunkt und einen Endpunkt auf der zukünftigen Fahrzeugbewegungsbahn ab der aktuellen Zeit bis zu der Zeit nach Verstreichen der vorgegebenen Zeitspanne zuordnet, und den Lichtemissionsteil der Lichtquelle (21) so bestimmt, dass sich der Lichtemissionsteil zwischen den Kontaktpunkten der dem Lenkrad (2) zugeordneten Tangentenlinien bewegt.

8. Fahrzeugverhaltensübertragungsvorrichtung nach Anspruch 6, wobei die Emissionsmusterbestimmungseinheit (13) dem Außenumfang des Lenkrades (2) eine Tangentenlinie zu der zukünftigen Fahrzeugbewegungsbahn ab der aktuellen Zeit bis zu der Zeit nach Verstreichen der vorgegebenen Zeitspanne zuordnet, und den Lichtemissionsteil der Lichtquelle (21) so bestimmt, dass sich der Lichtemissionsteil innerhalb eines vorgegebenen Bereiches bewegt, der einen Kontaktpunkt der dem Lenkrad (2) zugeordneten Tangentenlinie als ein Zentrum aufweist.

9. Fahrzeugverhaltensübertragungsvorrichtung nach Anspruch 8, wobei die Emissionsmusterbestimmungseinheit (13) einen Bewegungsbereich des Lichtemissionsteils entsprechend der Größe der Giergeschwindigkeit oder der Größe der Querbeschleunigung bestimmt.

10. Fahrzeugverhaltensübertragungsvorrichtung nach Anspruch 6, wobei die Emissionsmusterbestimmungseinheit (30) den Lichtemissionsteil der Lichtquelle (21) des Lenkrades (2) in eine Vielzahl von Bereichen unterteilt, und unter der Vielzahl von Bereichen einen Bereich bestimmt, innerhalb dessen der Lichtemissionsteil entsprechend der zukünftigen Fahrzeugbewegungsbahn bewegt wird.

11. Fahrzeugverhaltensübertragungsvorrichtung nach einem der Ansprüche 1 bis 4, des Weiteren umfassend eine Winkelermittlungseinheit (4), die dazu ausgelegt ist, einen Drehwinkel des Lenkrades (2) zu ermitteln, wobei die Emissionsmusterbestimmungseinheit (13) den Lichtemissionsteil der Lichtquelle (21) dazu veranlasst, sich entsprechend dem Drehwinkel des Lenkrades (2) zu bewegen, der von der Winkelermittlungseinheit (4) ermittelt wird, so dass eine Beleuchtungsposition auch dann beibehalten wird, wenn sich das Lenkrad (2) dreht.

12. Fahrzeugverhaltensübertragungsvorrichtung nach einem der Ansprüche 1 bis 11, wobei die Lichtquelle (21) mit einem Streuungselement bedeckt ist, welches Licht streut.

13. Fahrzeugverhaltensübertragungsvorrichtung nach einem der Ansprüche 1 bis 11, wobei ein Reflektor (24), der Licht von der Lichtquelle (21) reflektiert, in dem Lenkrad (2) angeordnet ist, so dass der Insasse das von dem Reflektor (24) reflektierten Licht optisch durch einen Schlitz (25) erkennen kann.

14. Fahrzeugverhaltensübertragungsvorrichtung nach einem der Ansprüche 1 bis 13, umfassend eine Lenkvorrichtung mit variablem Übersetzungsverhältnis, die ein Untersetzungsverhältnis zwischen dem Winkel des Lenkrades (2) und einem Einschlagwinkel ändert, wobei die automatisierte Fahrsteuerung so durchgeführt wird, dass der Drehwinkel des Lenkrades (2) fixiert ist und der Lichtemissionsteil der Lichtquelle (21) bewegt wird.

15. Fahrzeugverhaltensübertragungsvorrichtung nach einem der Ansprüche 1 bis 13, umfassend eine Steer-by-wire-Vorrichtung, die einen Einschlagwinkel basierend auf einer Betätigung des Rades (2) elektrisch steuert, während eine mechanische Verbindung zwischen dem Lenkrad (2) und einem sich drehenden Rad unterbrochen ist, wobei die automatisierte Fahrsteuerung so durchgeführt wird, dass der Winkel des Lenkrades (2) fixiert ist und der Lich-

EP 3 127 776 B1

temissionsteil der Lichtquelle (21) bewegt wird.

16. Fahrzeugverhaltensübertragungsvorrichtung nach Anspruch 1, des Weiteren umfassend:

eine Lenkungssteuerungseinheit (44), die dazu ausgelegt ist, eine Beziehung zwischen einem Einschlagwinkel eines sich drehenden Rades des automatisiert fahrenden Fahrzeugs und einem Lenkwinkel des Lenkrades (5) frei zu steuern; und
eine Drehmusterbestimmungseinheit (41), die dazu ausgelegt ist, einen Drehwinkel des Lenkrades (5) basierend auf der berechneten zukünftigen Fahrzeugbewegungsbahn zu bestimmen.

17. Fahrzeugverhaltensübertragungsvorrichtung nach Anspruch 16, wobei
die Drehmusterbestimmungseinheit (41) an einer Position an einem oberen Ende des Lenkrades (5) Ausrichtungen von einem Startpunkt zu einem Endpunkt auf der zukünftigen Fahrzeugbewegungsbahn ab einer aktuellen Zeit bis zu einer Zeit nach Verstreichen einer vorgegebenen Zeitspanne anzeigt.

18. Fahrzeugverhaltensübertragungsvorrichtung nach Anspruch 16, wobei
die Drehmusterbestimmungseinheit (41) den Drehwinkel des Lenkrades (5) entsprechend einer Giergeschwindigkeit oder einer Querbeschleunigung bestimmt.

**Revendications**

1. Dispositif de transmission de comportement de véhicule, comprenant :

une unité de calcul de comportement de véhicule (12) configurée pour calculer une trajectoire de véhicule future ;
une source de lumière (21) disposée sur un volant de direction (2) d'un véhicule à conduite automatisée ; et
une unité de détermination de motif d'émission (13) configurée pour déterminer une partie d'émission de lumière de la source de lumière (21) sur base de la trajectoire de véhicule future calculée,
**caractérisé en ce que**
l'unité de calcul de comportement de véhicule (12) calcule la trajectoire de véhicule future sur base d'un plan de voyage du véhicule à conduite automatisée ; et
l'unité de détermination de motif d'émission (13) détermine la partie d'émission de lumière de la source de lumière (21) sur base de la trajectoire de véhicule future à partir d'un temps actuel jusqu'à un temps après écoulement d'une période prédéterminée.

2. Dispositif de transmission de comportement de véhicule selon la revendication 1, dans lequel
l'unité de détermination de motif d'émission (13) commande à la partie d'émission de lumière de la source de lumière (21) de se déplacer sur base de la trajectoire de véhicule future.

3. Dispositif de transmission de comportement de véhicule selon la revendication 1 ou 2, comprenant en outre une unité de détermination d'état de contrôle (11) configurée pour déterminer si le véhicule à conduite automatisée met en oeuvre ou non le contrôle de conduite automatisé, dans lequel
quand il est déterminé que le contrôle de conduite automatisé n'est mas mis en oeuvre, la partie d'émission de lumière de la source de lumière (21) indique une information différente de la trajectoire de véhicule future.

4. Dispositif de transmission de comportement de véhicule selon l'une quelconque des revendications 1 à 3, dans lequel
l'unité de détermination de motif d'émission (13) détermine une couleur d'éclairage de la source de lumière (21) conformément à la grandeur d'un taux de lacet ou à la grandeur d'une accélération latérale.

5. Dispositif de transmission de comportement de véhicule selon l'une quelconque des revendications 1 à 4, dans lequel
l'unité de détermination de motif d'émission (13) détermine une vitesse de déplacement de la partie d'émission de lumière de la source de lumière (21) conformément à la grandeur d'un taux de lacet ou à la grandeur d'une accélération latérale.

6. Dispositif de transmission de comportement de véhicule selon l'une quelconque des revendications 1 à 5, dans lequel
la partie d'émission de lumière de la source de lumière (21) est une périphérie externe du volant de direction (2).

7. Dispositif de transmission de comportement de véhicule selon la revendication 6, dans lequel

l'unité de détermination de motif d'émission (13) mappe, sur la périphérie externe du volant de direction (2), des lignes tangentes passant par un point de départ et un point d'arrivée sur la trajectoire de véhicule future depuis le temps actuel jusqu'à un temps après écoulement de la période prédéterminée, et détermine la partie d'émission de lumière de la source de lumière (21) de telle sorte que la partie d'émission de lumière se déplace entre des points de contact sur les lignes tangentes mappées avec le volant de direction (2).

**8.** Dispositif de transmission de comportement de véhicule selon la revendication 6, dans lequel
l'unité de détermination de motif d'émission (13) mappe, sur la périphérie externe du volant de direction (2), une ligne tangente à la trajectoire de véhicule future depuis le temps actuel jusqu'à un temps après écoulement de la période prédéterminée, et détermine la partie d'émission de lumière de la source de lumière (21) de telle sorte que la partie d'émission de lumière se déplace dans une plage prédéterminée ayant pour centre le point de contact de la ligne tangente mappée avec le volant de direction (2).

**9.** Dispositif de transmission de comportement de véhicule selon la revendication 8, dans lequel
l'unité de détermination de motif d'émission (13) détermine une plage de déplacement de la partie d'émission de lumière conformément à la grandeur du taux de lacet ou à la grandeur de l'accélération latérale.

**10.** Dispositif de transmission de comportement de véhicule selon la revendication 6, dans lequel
l'unité de détermination de motif d'émission (13) divise la partie d'émission de lumière de la source de lumière (21) du volant de direction (2) en une pluralité de zones, et
détermine, parmi la pluralité de zones, une zone dans laquelle la partie d'émission de lumière est déplacée conformément à la trajectoire de véhicule future.

**11.** Dispositif de transmission de comportement de véhicule selon l'une quelconque des revendications 1 à 4, comprenant en outre
une unité de détection d'angle (4) configurée pour détecter un angle de rotation du volant de direction (2), dans lequel l'unité de détermination de motif d'émission (13) commande à la partie d'émission de lumière de la source de lumière (21) de se déplacer conformément à l'angle de rotation du volant de direction (2) détecté par l'unité de détection d'angle (4), de telle sorte qu'une position d'éclairage est maintenue même quand le volant de direction (2) tourne.

**12.** Dispositif de transmission de comportement de véhicule selon l'une quelconque des revendications 1 à 11, dans lequel
la source de lumière (21) est recouverte par un élément de diffusion qui diffuse la lumière.

**13.** Dispositif de transmission de comportement de véhicule selon l'une quelconque des revendications 1 à 11, dans lequel
un réflecteur (24) qui réfléchit la lumière provenant de la source de lumière (21) est pourvu à l'intérieur du volant de direction (2) pour permettre à l'occupant de reconnaître visuellement la lumière réfléchie par le réflecteur (24) à travers une fente (25).

**14.** Dispositif de transmission de comportement de véhicule selon l'une quelconque des revendications 1 à 13, comprenant
un dispositif de direction à rapport de transmission variable qui change le rapport de réduction entre l'angle du volant de direction (2) et l'angle de braquage, dans lequel
le contrôle de conduite automatisé est mis en oeuvre avec l'angle de rotation du volant de direction (2) fixé et la partie d'émission de lumière de la source de lumière (21) est déplacée.

**15.** Dispositif de transmission de comportement de véhicule selon l'une quelconque des revendications 1 à 13, comprenant
un dispositif de direction à commande électrique qui contrôle électriquement un angle de braquage sur base d'un actionnement du volant de direction (2) alors qu'une connexion mécanique entre le volant de direction (2) et une roue directrice est coupée, dans lequel
le contrôle de conduite automatisé est mis en oeuvre avec l'angle du volant de direction (2) fixé et la partie d'émission de lumière de la source de lumière (21) est déplacée.

**16.** Dispositif de transmission de comportement de véhicule selon la revendication 1, comprenant en outre :

une unité de commande de direction (44) configurée pour contrôler librement la relation entre l'angle de braquage d'une roue directrice du véhicule à conduite automatisée et l'angle de direction du volant de direction (5) ; et une unité de détermination de motif de rotation (41) configurée pour déterminer l'angle de rotation du volant de direction (5) sur base de la trajectoire de véhicule future calculée.

17. Dispositif de transmission de comportement de véhicule selon la revendication 16, dans lequel l'unité de détermination de motif de rotation (41) indique, à une position sur une extrémité supérieure du volant de direction (5), des orientations depuis un point de départ jusqu'à un point d'arrivée sur la trajectoire de véhicule future depuis un temps actuel jusqu'à un temps après écoulement d'une période prédéterminée.

18. Dispositif de transmission de comportement de véhicule selon la revendication 16, dans lequel l'unité de détermination de motif de rotation (41) change l'angle de rotation du volant de direction (5) conformément à un taux de lacet ou à une accélération latérale.

FIG. 1

ECU 1

AUTOMATED DRIVING CONTROL UNIT 3

ANGLE DETECTION UNIT 4

CONTROL STATUS DETERMINATION UNIT 11

VEHICLE BEHAVIOR CALCULATION UNIT 12

EMISSION PATTERN DETERMINATION UNIT 13

MOVEMENT DIRECTION CALCULATION UNIT 14

LIGHTING COLOR CALCULATION UNIT 15

LIGHTING POSITION CALCULATION UNIT 16

EMISSION CONTROL UNIT 17

INDICATION UNIT 2

17

FIG. 2

FIG. 3

(a)

(b)

FIG. 4

(a)

(b)

EP 3 127 776 B1

FIG. 5

FIG. 6

EP 3 127 776 B1

FIG. 7

23

# FIG. 8

(a)

Lb'

La'

2

(b)

Lb'    P2

La'

P1

2

(c)

P2

32

21

P1

2

## FIG. 9

(a)

Lb'

2

(b)

Lb'

P2

2

(c)

P2

P4

P3

21

2

## FIG. 10

(a)

(b)

# FIG. 11

FIG. 12

EP 3 127 776 B1

EP 3 127 776 B1

FIG. 13

- AUTOMATED DRIVING CONTROL UNIT — 3
- ANGLE DETECTION UNIT — 4
- ECU — 1
- CONTROL STATUS DETERMINATION UNIT — 11
- VEHICLE BEHAVIOR CALCULATION UNIT — 12
- ROTATION PATTERN DETERMINATION UNIT — 41
- ROTATION VELOCITY CALCULATION UNIT — 42
- ROTATION ANGLE CALCULATION UNIT — 43
- STEERING CONTROL UNIT — 44
- STEERING WHEEL — 5

FIG. 14

FIG. 15

(a)

(b)

(c)

# FIG. 16

(a)

(b)

## FIG. 17

FIG. 18

START

IS SBW NORMAL? — S23 — NO

YES

CONTROL VEHICLE — S21    CALCULATE TRAJECTORY — S22

DURING AUTOMATED DRIVING? — S24 — NO

YES

CALCULATE ROTATION ANGLE
CALCULATE ANGULAR VELOCITY — S25

CONTROL ANGLE
OF STEERING WHEEL — S26

END

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009018722 A
- WO 2004106145 A1
- US 2011187518 A1
- JP 2012076639 A